# EUROPEAN PATENT SPECIFICATION

(11) **EP 2 502 755 B1**
(45) Date of publication and mention of the grant of the patent: **16.04.2014**
(21) Application number: 12161037.2
(22) Date of filing: 23.03.2012
(51) Int. Cl.: B60C 9/14, B60C 9/18, C08L 7/00, C08K 3/04, C08K 3/06, C08L 21/00

(54) **Tire assembly containing an internal composite comprising a metal cord reinforced rubber layer with an auxiliary buffer rubber layer**
Reifenanordnung mit einem internen Verbundstoff mit einer mit Metallcord verstärkten Gummischicht mit einer Hilfspuffergummischicht
Ensemble de pneu contenant un composite interne avec une couche de caoutchouc renforcée par câble métallique avec une couche tampon en caoutchouc auxiliaire

(30) Priority: 24.03.2011 US 201113070514
(43) Date of publication of application: 26.09.2012
(73) Proprietor: The Goodyear Tire & Rubber Company, Akron, OH 44316-0001 (US)
(72) Inventor: Sandstrom, Paul Harry, Cuyahoga Falls, OH Ohio 44223 (US)
(74) Representative: Kutsch, Bernd

(56) References cited:
- EP-A1- 1 647 420
- EP-A1- 2 060 390
- WO-A1-03/066353
- FR-A1- 2 925 923

## Description

### Field of the Invention

This invention relates to a tire comprising an assembly of uncured rubber components wherein said assembly includes a circumferential uncured, preferably pre-formed internal composite comprising a combination of at least one uncured layer containing metal cord reinforcement with a high sulfur content and at least one adjoining auxiliary buffer layer of uncured rubber layer having a significantly lower sulfur content and without cord reinforcement. The auxiliary buffer rubber layer(s) with the reduced sulfur content is provided to promote tear resistance and sulfur cure reversion resistance for the composite. In a preferred embodiment, the uncured rubber composite is pre-formed prior to its application to and made a part of the tire assembly of components. The tire assembly is thereafter cured in a suitable mold to form a tire.

### Background of the Invention

Pneumatic rubber tires are sometimes prepared with a circumferential internal metal cord reinforced rubber layer which underlies its circumferential rubber tread and is positioned between the tire tread and supporting tire carcass. The metal cord containing rubber layer is sometimes referred to as a belt ply.

The circumferential rubber belt plies, or layers, for this invention preferably contain reinforcement in a form of a plurality of brass coated steel wire cords. The rubber composition of the belt ply typically comprises a sulfur curable rubber such as cis 1,4-polyisoprene rubber.

To promote adhesion of the rubber composition to the brass coated steel cord, the rubber composition typically contains a relatively high sulfur content of at least 2.5 phr, such as, for example, in a range of from 2.5 to 8, alternately in a range of from 3 to 5, phr of free sulfur to both promote adhesion of the rubber composition to the cord reinforcement, and to promote an increase in sulfur cross-link density of the rubber composition.

It is to be appreciated that a portion of the free sulfur contained in the cord reinforced uncured rubber layer(s) would migrate to the surface of the rubber layer and thereby into adjoining rubber layers of the tire tread and/or tire carcass.

A significant aspect of this invention is to evaluate an effect of positioning one or more layers of an auxiliary buffer layer on an upper or lower surface or sandwiched between two of high sulfur-containing metal cord reinforced layers which has a significantly lower free sulfur content to act as a barrier rubber layer to thereby promote a greater tear resistance property, a greater resistance to sulfur cure reversion and, also to absorb a portion of free sulfur which migrated to the surface of the metal cord reinforced layer. Further, it is desired to promote an improvement in interfacial gradation of cured adhesion between the cord reinforced layers, tire tread and/or carcass components of the tire.

In the description of this invention, the term "phr" where used means "parts of material by weight per 100 parts by weight of rubber". The terms "rubber" and "elastomer" may be used interchangeably unless otherwise indicated. The terms "rubber composition" and "compound" may be used interchangeably unless otherwise indicated.

WO-A- 03/066353 describes a tire assembly in accordance with the preamble of claim 1.

### Summary and Practice of the Invention

The invention relates to a tire assembly in accordance with claim 1 and to a tire in accordance with claim 15.

Dependent claims refer to preferred embodiments of the invention.

In accordance with a preferred aspect of this invention, a tire is provided which comprises an assembly of uncured rubber components wherein said assembly includes a circumferential uncured, preferably pre-formed internal composite comprising a combination of at least one uncured rubber layer of a metal cord reinforcement containing rubber composition with a sulfur content of at least 2.5 phr and at least one adjoining auxiliary buffer layer of uncured rubber layer without cord reinforcement and having a sulfur content of at least 1 phr less than said sulfur content of said metal cord reinforcement-containing rubber layer. The composite is positioned between a circumferential uncured outer rubber tread and supporting inner uncured rubber carcass. In a preferred embodiment, the uncured rubber composite with the auxiliary buffer rubber layer(s) is pre-formed prior to its application to and made a part of the tire assembly of components. The tire assembly is thereafter cured in a suitable mold to form a tire.

In an embodiment of the invention, an uncured tire is provided comprising an assembly of uncured rubber components including an outer circumferential uncured rubber tread layer and an inner supporting uncured rubber carcass wherein said assembly includes an internal circumferential uncured, preferably pre-formed composite positioned between said tire tread and said tire carcass wherein said composite is composed of a combination of at least one uncured basic rubber layer comprising cis 1,4-polyisoprene rubber and having a free sulfur content of at least 2.5 phr, alternately in a range of from 3 to 5 phr, and which contains metal reinforcement comprising brass coated steel cords and at least one adjoining auxiliary uffer layer of uncured rubber having a significantly lower sulfur content of at least 1 phr, alternately at least 1.5 phr, less than said free sulfur content of said basic metal cord reinforced rubber layer, wherein said auxiliary buffer rubber layer does not contain metal cord reinforcement and wherein said auxiliary adjoining buffer rubber layer is positioned on at least one of top, bottom and between two of said metal cord-containing rubber layers.

In further accordance with this invention, a tire is provided comprising said assembly of rubber components cured in a suitable mold.

To promote adhesion of the cured rubber composition to the brass coated steel cord, the uncured rubber composition of the basic rubber layer typically contains the relatively high free sulfur content.

Because of the significant differential of free sulfur contents between said auxiliary buffer uncured layer(s) and basic metal cord-containing layer, a greater tear resistance and resistance to sulfur cure reversion is promoted for the auxiliary buffer layer(s) and, further, at least a portion of free sulfur migrated to the surface of said basic metal cord-containing layer is absorbed by said auxiliary uncured buffer layer.

In one embodiment of the invention, said basic cord reinforced layer comprises:
(A) an uncured metal cord reinforcement-containing rubber composition comprising, based upon parts by weight per 100 parts by weight rubber (phr):
   (1) a diene elastomer based rubber comprising cis 1,4-polyisoprene rubber, and
   (2) 20 to 60, alternately from 30 to 50, phr of a reinforcing filler comprising:
      (a) a rubber reinforcing carbon black, or
      (b) silica, preferably precipitated silica, or
      (c) a combination of a rubber reinforcing carbon black and 5 to 45 phr of silica, preferably precipitated silica;
   (3) a coupling agent for said silica, when said rubber composition contains said silica, having a moiety reactive with hydroxyl groups (e.g. silanol groups) on said silica and another different moiety interactive with said cis 1,4-polyisoprene rubber,
   (4) optionally, a resinous reaction product of a methylene donor and methylene acceptor compound formed in situ within the rubber composition (formed from the reaction of said methylene donor and methylene acceptor within the rubber composition),
      wherein said methylene donor comprises hexamethoxymethylmelamine, and
      wherein said methylene acceptor comprises at least one of unmodified phenol novolac resin and modified phenol novolac resin, resorcinol and mixtures thereof;
   (5) optionally, a zirconium salt or cobalt salt comprising at least one of cobalt naphthenate, and cobalt neodecanoate in an amount of from 0.2 to 5 phr and
   (6) sulfur in an amount of at least 2.5 phr, alternately in a range of from 3 to 5 phr;
   (7) at least one cord, preferably a plurality of parallel cords aligned substantially parallel to each other, encapsulated by said cis 1,4-polyisoprene rubber based rubber composition,
      wherein said cords individually comprise of at least one filament, alternately a plurality of cabled (twisted together) filaments,
      wherein said filament comprises a brass coated steel filament; and
(B) at least one auxiliary buffer layer adjoining said basic metal cord-reinforced layer and positioned as at least one of on top of, on the bottom of said metal cord-reinforced layer and between two of said metal cord-reinforced layers, and
   wherein the rubber composition of said auxiliary buffer layer(s) comprises, based upon parts by weight per 100 parts by weight rubber (phr):
   (1) at least one diene-based rubber wherein said rubber includes cis 1,4-polyisoprene rubber,
   (2) 20 to 60, alternately from 30 to 50, phr of a reinforcing filler comprising:
      (a) a rubber reinforcing carbon black, or
      (b) a silica, preferably a precipitated silica, or
      (c) a combination of a rubber reinforcing carbon black and 5 to 45 phr of a silica, preferably precipitated silica;
   (3) a coupling agent for said silica, when said rubber composition contains said silica, having a moiety reactive with hydroxyl groups (e.g. silanol groups) on said silica and another different moiety interactive with said diene based rubber,
   (4) sulfur in an amount of at least 1 phr, alternately at least 1.5 phr, less than the sulfur content of said basic metal cord-reinforced rubber layer.

In practice, said auxiliary buffer layer might optionally contain said resinous product of said methylene donor and methylene acceptor compound or said optional zirconium or cobalt salt. It is appreciated that the sulfur for the rubber layers is accompanied by a sulfur cure accelerator such as for example a sulfenamide and, optionally a sulfur cure retarder.

In practice, the amount of the methylene donor compound, namely the methylene donor comprising hexamethoxymethylmelamine, for the metal cord-reinforced rubber composition may vary from, for example 0.5 to 5 phr.

The term "methylene acceptor" is known to those having skill in such art and is used to describe the reactant, or compound with which the methylene donor compound reacts to form what is believed to be an intermediate methylol monomer. It is envisioned that a condensation of the intermediate methylol monomer by formation of a methylene bridge produces a resin material. The initial reactant for which it is envisioned contributes the moiety that later forms the methylene bridge and ultimately the resin is referred to as being the methylene donor compound and the other reactant is referred to as being the methylene acceptor compound. As previously indicated, representative compounds which may be used as a methylene acceptor include phenol novolac resins, including modified phenol novolac resins. Various methylene acceptors are mentioned in, for example, US-B- 6,605,670, US-B- 6,472,457, US-B- 5,945,500, US-B- 5,936,056, US-B- 5,688,871, US-B-5,665,799, US-B- 5,504,127, US-B- 5,405,897, US-B- 5,244,725, US-B- 5,206,389, US-B- 5,194,513, US-B- 5,030,692, US-B- 4,605,696, US-B- 4,436,853 and US-B-4,092,455. Examples of modified novolac resins include, for example, cashew nut shell oil and alkyl modified phenol novolac resin such as, for example, SP6700™.

The amount of methylene acceptor compound in the rubber composition may vary, depending somewhat upon the amount of methylene donor compound used as well as the selection of the methylene acceptor compound itself and a desired ratio of methylene donor compound to methylene acceptor compound. For example, the amount of methylene acceptor compound, as a component of said resinous reaction product of said methylene donor and methylene acceptor, may be in a range of from 0.5 to 5, alternatively from 1 to 3 phr.

A weight ratio of the methylene acceptor compound to methylene donor compound may range, for example, from 5/1 to 1/5.

In practice, as indicated, the optional cobalt salt is comprised of at least one of a cobalt neodecanoate and cobalt naphthenate.

The amount of zirconium or cobalt salt, when used in the metal cord-reinforced rubber composition, may vary considerably. For example, for a wire coat rubber composition where the cord is comprised of at least one wire filament, it may range from 0.2 to 5 phr.

In practice, representative of sulfenamide primary sulfur cure accelerators for this invention are comprised of cyclohexyl benzothiazole sulfenamide, tertiary butyl benzothiazole sulfenamide or dicyclohexyl benzothiazole sulfenamide. Primary sulfur cure accelerators comprised of cyclohexyl benzothiazole sulfenamide or tertiary butyl benzothiazole sulfenamide are preferred.

A significance of requiring the rubber of the rubber composition of the metal cord reinforced rubber composite to be cis 1,4-polyisoprene rubber, namely cis 1,4-polyisoprene rubber in a form of synthetic or natural polyisoprene rubber, is to promote a relatively high tear strength property and good processability in combination with promoting a relatively low hysteresis (relatively high hot rebound property) for the rubber composition.

A significance of using a combination of methylene donor compound and methylene acceptor compound for the rubber composition of the cord reinforced rubber composite is considered herein to be beneficial to promote high low strain stiffness (G' storage modulus at 10 percent strain at 100°C) values for the cured rubber composition and good adhesion of the rubber composition to the reinforcing cord.

A significance of using the optional zirconium or cobalt salt, particularly comprising the cobalt naphthenate, for the rubber composition of the metal cord reinforced rubber composition is considered herein to be beneficial to promote good cord adhesion particularly where brass or bronze coated steel wire is used for the cord.

A significance of using precipitated silica reinforcement, in combination with a silica coupling agent, is considered herein to be beneficial to promote low hysteresis for the rubber composition.

The practice of this invention is further illustrated by reference to the following examples which are intended to be representative rather than restrictive of the scope of the invention. Unless otherwise indicated, all parts and percentages are by weight.

### EXAMPLE I

Rubber samples were prepared to evaluate use of free sulfur in amounts of 4, 3.2 and 2.4 phr, respectively, in three rubber Samples A, B and C for use as brass coated steel cord reinforced circumferential rubber belt plies for a vehicular tire.

As indicated above, the rubber samples are referred to herein as rubber Samples A, B and C with 5, 4 and 3 phr of sulfur curative (which is 80 percent active sulfur), respectively.

The rubber compositions were prepared by blending the ingredients in an internal rubber mixer in a series of sequential mixing steps while sheeting out the rubber mixtures and cooling to a temperature below 40°C between mixing steps. The sequential mixing steps were comprising a first non-productive mixing step followed by a second non-productive mixing step and thence by a productive mixing step (in which sulfur and accelerators were added).

The basic formulation for the rubber Samples A, B and C is presented in the following Table 1 in terms of parts by weight unless otherwise indicated.

**Table 1**

| First Non-Productive Mixing Step (NP1) | Parts |
|---|---|
| Natural cis 1,4-polyisoprene rubber¹ | 100 |
| Carbon black (N347)² | 60 |
| Tackifier resin | 1 |
| Methylene acceptor (resorcinol) | 2 |
| Rubber processing oi⁴ | 1 |
| Fatty acid⁵ | 2 |

| Second Non-Productive Mixing Step (NP2) | |
|---|---|
| This step is for additional mixing without addition of ingredients | |

| Productive Mixing Step (P) | |
|---|---|
| Sulfur (80% active) | 5, 4, 3 |
| Sulfur cure accelerators/retarder⁶ | 1.5 |
| Zinc oxide | 3 |
| Methylene donor (Hexamethoxy methylmelamine) | 3 |
| Antioxidant | 0.8 |

| | |
|---|---|
| ¹Natural rubber, TSR10 ²Rubber reinforcing carbon black (N347), an ASTM designation ³Phenol/formaldehyde resin ⁴ Naphthenic/paraffinic rubber processing oil ⁵Blend of fatty acids comprised primarily of stearic acid, palmitic acid and oleic acid ⁶Sulfenamide accelerator and N-cyclohexylthiophthalimide sulfur cure retarder | |

Cobalt naphthenate (10.5 percent by weight cobalt) may be added, if desired, to the rubber composition.

The following Table 2 illustrates cure behavior and various physical properties of rubber Samples A, B and C based upon the basic formulation of Table 1. The rubber samples were sulfur cured for 32 minutes at 150°C.

**Table 2**

| | Rubber Samples | | |
|---|---|---|---|
| Sulfur Curative | A | B | C |
| Sulfur (80% active), phr | 5 | 4 | 3 |
| Net active free sulfur content (phr) | 4 | 3.2 | 2.4 |
| | | | |

| Properties | | | |
|---|---|---|---|
| Rheometer, 150°C (MDR)¹ | | | |
| Maximum torque (dNm) | 45.7 | 43.9 | 40.9 |
| Minimum torque (dNm) | 2.8 | 3.1 | 3.0 |
| Delta torque (dNm) | 42.9 | 40.8 | 37.9 |
| T90, minutes | 13.9 | 13.2 | 13 |
| | | | |

| Stress-Strain: ATS, 32 min, 150°C² | | | |
|---|---|---|---|
| Tensile strength (MPa) | 14.3 | 12.4 | 12.7 |
| Elongation (ultimate) at break (%) | 339 | 346 | 363 |
| 300% modulus, ring (MPa) | 13.9 | 11.3 | 10.9 |
| | | | |

| Wire cord adhesion³ 23°C, (N) | | | |
|---|---|---|---|
| Force (N), original, 32 minutes at 150°C | 570 | 491 | 452 |
| Percent rubber coverage of wire (%) | 75 | 40 | 30 |
| Force (N), aged 20 days in water at 90°C | 632 | 163 | 124 |
| Percent rubber coverage of wire (%) | 50 | 35 | 10 |
| Force (N), aged 10 days in nitrogen, 120 °C | 719 | 649 | 378 |
| Percent rubber coverage of wire (%) | 90 | 80 | 15 |
| | | | |
| Tear strength⁴, (N) at 95°C | 60 | 74 | 85 |

| | | | |
|---|---|---|---|
| ¹Data obtained according to Moving Die Rheometer instrument, model MDR-2000 by Alpha Technologies, used for determining cure characteristics of elastomeric materials, such as for example Torque and T25. ²Data obtained according to Automated Testing System instrument by the Instron Corporation which incorporates six tests in one system. Such instrument may determine ultimate tensile, ultimate elongation and modulii. ³Standard wire and textile cord adhesion test (SWAT) conducted by embedding brass coated wire cord in the rubber composition. The rubber/cord samples were then cured at the indicated temperatures. The respective cords in the rubber samples were subjected to a pull-out test according to ASTM D2229-73. The results of the pull-out tests are expressed in Newtons. The percentage of rubber coverage of the wire cord is reported where 100 percent coverage is desirable although difficult to obtain. The wire cord was a brass coated steel wire. ⁴Data obtained according to a peel strength adhesion test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument. The area of contact at the interface between the rubber samples is facilitated by placement of a Mylar™ film between the samples with a cut-out window in the film to enable the two rubber samples to contact each other following which the samples are vulcanized together and the resultant composite of the two rubber compositions are used for the peel strength test. | | | |

It can be seen from Table 2 that, as the free sulfur content increased from 2.4 to 4 phr, the wire adhesion beneficially increased 26 percent from 452 to 570 Newtons, the aged-in-water wire adhesion beneficially increased 409 percent from 124 to 632 Newtons and the aged-in-nitrogen wire adhesion beneficially increased 90 percent from 378 to 719 Newtons. It is also shown in this data that the percent of rubber coverage is also increased by increasing the free sulfur content of the rubber compositions, which is also favorable for maintaining good adhesion to brass coated steel wire.

In summary, it can be seen from Table 2 that, for the rubber composition, reducing the active (net) sulfur content from 4 phr (for rubber Sample A) to 2.4 phr (for rubber Sample C) caused a sharp decrease in the brass coated steel wire adhesion and percent rubber coverage, but also provided significantly higher tear strength for rubber Sample C with the lower active sulfur content of 2.4 phr.

Accordingly, it can be seen that keeping the active sulfur content below 2.5 phr (namely in rubber Sample C) provided improved (increased) tear strength with a lower wire adhesion and lower rubber coverage.

It is concluded that the relatively high active sulfur content rubber composition (namely as rubber Sample A) can be used for the brass coated steel wire for improved wire adhesion, but that the lower active sulfur content rubber composition (namely as rubber Sample C) can be used to improve tear strength and therefore be suitable for the auxiliary buffer rubber layer adjacent to the basic higher sulfur content-containing wire cord reinforced rubber composition (namely rubber Sample A) in a sense of providing a buffer rubber layer of beneficially increased tear resistance and also to absorb a portion of free sulfur migrated to the surface of the basic wire reinforced rubber composition.

### EXAMPLE II

An additional rubber sample was prepared in order to evaluate use of a much lower active free sulfur content of only 0.8 phr for the rubber composition (referred to herein as rubber Sample D).

The rubber composition was prepared in the manner of Example I.

The basic formulation for the rubber Sample D is presented in the following Table 3 in terms of parts by weight unless otherwise indicated

**Table 3**

| Non-Productive Mixing Step (NP1) | Parts |
|---|---|
| Natural cis 1,4-polyisoprene rubber | 100 |
| Carbon black (N347) | 45 |
| Tackifier resin | 2 |
| Rubber processing oil | 3 |
| Fatty acid | 2 |
| | |

| Productive Mixing Step (P) | |
|---|---|
| Sulfur (100% active) | 0.8 |
| Sulfur cure accelerators/retarder | 2.7 |
| Zinc oxide | 1.5 |
| Antioxidant | 1 |

The indicated materials in Table 1 were used except for the methylene acceptor and donor materials. A cobalt salt was not used.

The following Table 4 illustrates cure behavior and various physical properties of rubber Sample D based upon the basic formulation of Table 3. The rubber samples were sulfur cured for 32 minutes at 150°C.

**Table 4**

| | Rubber Sample D |
|---|---|
| Sulfur curative (100% active), phr | 0.8 |
| | |

| Properties | |
|---|---|
| Rheometer, 150°C (MDR) | |
| Maximum torque (dNm) | 11.4 |
| Minimum torque (dNm) | 1.0 |
| Delta torque (dNm) | 10.4 |
| T90, minutes | 9.8 |
| | |

| Stress-Strain: ATS, 32 min, 150°C | |
|---|---|
| Tensile strength (MPa) | 19.5 |
| Elongation (ultimate) at break (%) | 527 |
| 300% modulus, ring (MPa) | 9.5 |
| | |
| Tear strength, (N) at 95°C | 125 |

The indicated tests were conducted in the manner of Example I

It can be seen from Table 4 that the much lower sulfur content for the rubber composition yielded a significantly higher tear strength of 125 Newtons and, from results indicated in Examples I and II, would be expected to provide a significantly lower wire adhesion value.

It is concluded that use of the lower sulfur content in the cis 1,4-polyisoprene rubber based rubber composition will yield a higher tear strength for the rubber composition than similar rubber composition having a significantly higher free sulfur content with an expected higher adhesion to the brass surface of the brass coated steel wire.

This unique choice of high and low sulfur contents in the rubber composition around and in contact with the brass coated steel wire would allow attainment of high adhesion to the brass coating and also promote improved rubber composition integrity relating to its tear strength.

### Brief Description of Drawings

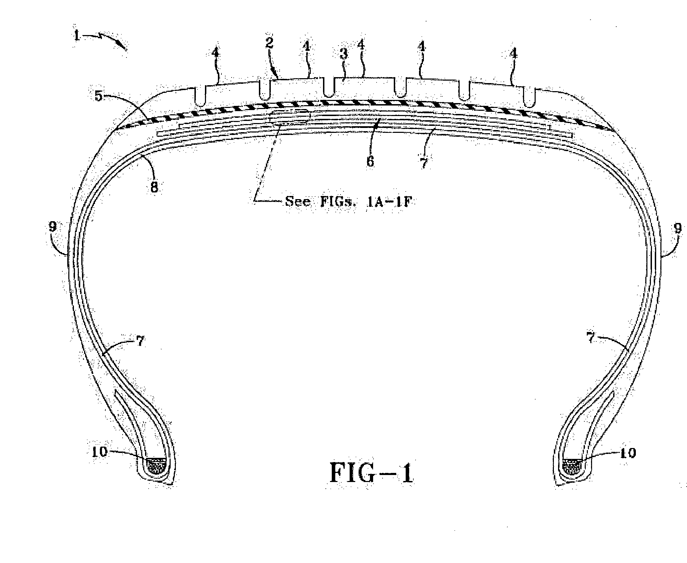

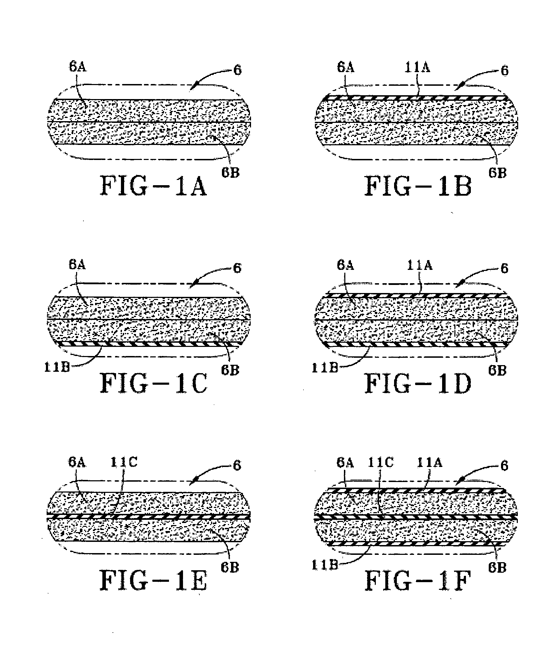

The drawings depict a tire cross-section as FIGURE 1 and inserts from the tire cross-section as FIGURES 1A through 1 F.

### The Drawings

FIG 1 depicts a tire cross-section 1 comprising a circumferential rubber tread 2 configured with an outer tread cap rubber layer 3, having lugs, grooves and running surface 4, and underlying tread base rubber layer 5. The tire 1 is depicted with a sidewall 9 and spaced apart beads 10, one or more carcass plies 7 and an inner liner 8. Positioned between the tread 2 and carcass 7 are one or more, preferably two, circumferential belt layers 6.

A portion of the belt layers 6 is depicted in expanded views FIGS 1A through 1 F, each with two belt layers composed of brass coated steel cord reinforced rubber layers 6A and 6B. For this drawing depiction, the rubber of layers 6A is composed of uncured natural cis 1,4-polyisoprene rubber with a free sulfur content of 3 phr.

FIG 1A depicts the belt 6 configured with dual cord reinforced layers 6A and 6B.

It is contemplated that a portion of the free sulfur migrates to the surfaces of belt layers 6A and 6B.

FIGS 1B through 1 F depict the belt 6 with one or more uncured buffer rubber layer(s), namely 11A, 11B and 11C, which contain only 2 phr of free sulfur and therefore 1 phr less than the free sulfur content of the cis 1,4-polyisoprene based rubber composition of the belt layers 6A and 6B.

It is contemplated that the buffer rubber layers 11 A and 11B, because of their reduced free sulfur content, act in the nature of buffer rubber layers to provide significantly increased tear resistance and, also, to absorb a portion of the migrated free sulfur at the interface between the belt 6 and buffer layers 11A and 11B to thereby insulate the tire tread 2 and/or tire carcass 7 from excess interfacial migrated free sulfur from the belt 6.

For FIG 1B, the buffer rubber layer 11A is positioned on top of the belt 6, namely on top of belt layer 6A, to thereby insulate the tire tread 2, namely the tread base layer 5, from excess interfacial migrated free sulfur from the belt 6, namely from belt layer 6A.

For FIG 1C, the buffer rubber layer 11B is positioned on the bottom of the belt 6, namely on the bottom of belt layer 6B, to thereby insulate the tire carcass 7, namely the carcass plies, from excess interfacial migrated free sulfur from the belt 6, namely from belt layer 6B.

For FIG 1D, the buffer rubber layers 11A and 11B are individually positioned on top and bottom, respectively, of the belt 6, namely on top of belt layer 6A and bottom of belt layer 6B, to thereby insulate both the tire tread 2, namely the tread base layer 5, and tire carcass 7 from excess interfacial migrated free sulfur from the belt 6, namely from belt layers 6A and 6B, respectively.

For FIG 1E, the buffer rubber layer 11C is positioned between, namely sandwiched between, the belt layers 6A and 6B of the belt 6 to thereby insulate the belt layers 6A and 6B from excess interfacial migrated free sulfur generated by each other.

For FIG 1F, the buffer rubber layer 11 A is positioned on top of the belt 6, namely on top of belt layer 6A, the buffer rubber layer 11B is positioned on the bottom of the belt 6, namely on bottom of belt layer 6B and buffer rubber layer 11C is positioned between belt layers 6A and 6B, to thereby:
(A) insulate the tire tread 2, namely the tread base layer 5, from excess interfacial migrated free sulfur from the belt 6, namely from belt layer 6A,
(B) insulate the tire carcass 7, namely the carcass plies, from excess interfacial migrated free sulfur from the belt 6, namely from belt layer 6B, and
(C) insulate the belt layers 6A and 6B from excess interfacial migrated free sulfur generated by each other.

## Claims

1. A tire assembly comprising an assembly of uncured components wherein the assembly of uncured components includes a circumferential uncured internal composite comprising a combination of at least one uncured layer (6A, 6B) of a metal cord reinforcement containing rubber composition with a sulfur content of at least 2.5 phr and at least one adjoining auxiliary buffer layer (11 A, 11 B, 11 C) of uncured rubber without cord reinforcement and having a sulfur content of at least 1 phr less than the sulfur content of the metal cord reinforcement containing rubber composition, wherein the uncured internal composite is positioned between an outer circumferential uncured tread (2) and a supporting inner uncured carcass (7), **characterized in that** the at least one uncured layer (6A, 6B) of a metal cord reinforcement containing rubber composition with a sulfur content of at least 2.5 phr is a metal cord reinforced belt ply extending circumferentially about the circumference of the tire.

2. The tire assembly of claim 1 wherein the metal cord of the metal cord reinforcement containing rubber composition is a brass coated metal cord.

3. The tire assembly of claim 1 or 2 wherein the metal cord reinforcement containing rubber composition comprises, based upon parts by weight per 100 parts by weight rubber (phr):
(1) a diene elastomer based rubber comprising cis 1,4-polyisoprene rubber,
(2) 20 to 60, alternately from 30 to 50, phr of a reinforcing filler comprising:
(a) a rubber reinforcing carbon black, or
(b) a silica, or
(c) a combination of a rubber reinforcing carbon black and 5 to 45 phr of a silica;
(3) a coupling agent for the silica, when the rubber composition contains silica, the coupling agent, if used, having a moiety reactive with hydroxyl groups on the silica and another different moiety interactive with the cis 1,4-polyisoprene rubber,
(4) optionally, a resinous reaction product of a methylene donor and methylene acceptor compound formed in situ within the rubber composition, wherein the methylene donor comprises hexamethoxymethylmelamine, and wherein the methylene acceptor comprises at least one of unmodified phenol novolac resin and modified phenol novolac resin, resorcinol and mixtures thereof,
(5) optionally, a zirconium salt or cobalt salt comprising at least one of cobalt naphthenate and cobalt neodecanoate in an amount of from 0.2 to 5 phr,
(6) sulfur in an amount of at least 2.5 phr, and
(7) at least one metal cord encapsulated by the cis 1,4-polyisoprene rubber based rubber composition.

4. The tire assembly of claim 1, 2 or 3 wherein the cords individually comprise at least one filament and wherein the at least one filament comprises of a brass coated steel filament.

5. The tire assembly of claim 1, 3 or 4 wherein at least one auxiliary buffer rubber layer (11 A, 11 B, 11 C) adjoining the at least one uncured layer (6A, 6B) is positioned as at least one of on top of, on the bottom of the at least one uncured layer (6A, 6B) and between two uncured layers (6A, 6B), and wherein the rubber composition of the auxiliary buffer layer(s) comprises, based upon parts by weight per 100 parts by weight rubber (phr):
(1) at least one diene-based rubber wherein the rubber includes cis 1,4-polyisoprene rubber,
(2) 20 to 60 phr of a reinforcing filler comprising:
(a) a rubber reinforcing carbon black, or
(b) a silica, or
(c) a combination of a rubber reinforcing carbon black and 5 to 45 phr of a silica,
(3) a coupling agent for the silica, when the rubber composition contains the silica, the coupling agent, if used, having a moiety reactive with hydroxyl groups on the silica and another different moiety interactive with the diene-based rubber,
(4) sulfur in an amount of at least 1 phr less than the sulfur content of the metal cord reinforcement containing rubber composition.

6. The tire assembly of at least one of the previous claims wherein the metal cord is a plurality of brass coated metal cords positioned in a substantially parallel configuration to each other.

7. The tire assembly of at least one of the previous claims wherein at least one uncured layer (6A, 6B) contains from 3 to 5 phr of free sulfur.

8. The tire assembly of at least one of the previous claims wherein the adjoining auxiliary buffer layer (11A, 11 B, 11 C) contains at least 1.5 phr less of free sulfur content than sulfur content of the at least one uncured layer (6A, 6B).

9. The tire assembly of at least one of the previous claims wherein the composite contains two of the metal cord reinforcement containing uncured rubber layers (6A, 6B).

10. The tire assembly of at least one of the previous claims wherein the auxiliary buffer layer (11 A, 11 B, 11 C) is positioned on top of and adjoining the at least one uncured layer (6A, 6B).

11. The tire assembly of at least one of the previous claims wherein the auxiliary buffer layer (11 A, 11 B, 11 C) is positioned between the at least one uncured layer (6A, 6B) and the tire tread (2).

12. The tire assembly of at least one of the previous claims wherein the auxiliary buffer layer (11A, 11B, 11C) is positioned on the bottom of and adjoining the at least one uncured layer (6A, 6B).

13. The tire assembly of at least one of the previous claims wherein the auxiliary buffer layer (11 A, 11 B, 11 C) is positioned between the at least one uncured layer (6A, 6B) and the tire carcass (7).

14. The tire assembly of at least one of the previous claims wherein the circumferential uncured internal composite is pre-formed prior to its application to and made a part of the tire assembly.

15. A tire comprising the sulfur cured tire assembly of at least one of the previous claims.

## Patentansprüche

1. Reifenanordnung, umfassend eine Anordnung aus unvulkanisierten Bauteilen, wobei die Anordnung aus unvulkanisierten Bauteilen einen umfangsgerichteten unvulkanisierten inneren Verbundwerkstoff umfasst, umfassend eine Kombination von mindestens einer unvulkanisierten Schicht (6A, 6B) aus einer eine Metallkordverstärkung enthaltenden Kautschukzusammensetzung mit einem Schwefelgehalt von mindestens 2,5 ThK und mindestens einer daran anschließenden Hilfspufferschicht (11A, 11B, 11C) aus unvulkanisiertem Kautschuk ohne Kordverstärkung und mit einem Schwefelgehalt von mindestens 1 ThK weniger als der Schwefelgehalt der eine Metallkordverstärkung enthaltenden Kautschukzusammensetzung, wobei der unvulkanisierte innere Verbundwerkstoff zwischen einer äußeren umfangsgerichteten unvulkanisierten Lauffläche (2) und einer tragenden inneren unvulkanisierten Karkasse (7) angeordnet ist, **dadurch gekennzeichnet, dass** die mindestens eine unvulkanisierte Schicht (6A, 6B) aus einer eine Metallkordverstärkung enthaltenden Kautschukzusammensetzung mit einem Schwefelgehalt von mindestens 2,5 ThK eine metallkordverstärkte Gürtellage ist, die sich in Umfangsrichtung um den Umfang des Reifens erstreckt.

2. Reifenanordnung nach Anspruch 1, wobei der Metallkord der eine Metallkordverstärkung enthaltenden Kautschukzusammensetzung ein messingbeschichteter Metallkord ist.

3. Reifenanordnung nach Anspruch 1 oder 2, wobei die eine Metallkordverstärkung enthaltende Kautschukzusammensetzung, auf Basis von Gewichtsteilen je 100 Gewichtsteile Kautschuk (ThK), umfasst:
(1) einen Kautschuk auf Dienelastomerbasis, umfassend cis-1,4-Polyisoprenkautschuk,
(2) 20 bis 60, alternativ 30 bis 50, ThK eines Verstärkungsfüllstoffs, umfassend:
(a) ein Kautschukverstärkungs-Carbon Black, oder
(b) ein Silika, oder
(c) eine Kombination eines Kautschukverstärkungs-Carbon Blacks und 5 bis 45 ThK eines Silikas;
(3) ein Kopplungsmittel für das Silika, wenn die Kautschukzusammensetzung Silika enthält, wobei das Kopplungsmittel, falls verwendet, einen Anteil, der mit Hydroxylgruppen an dem Silika reaktiv ist, und einen anderen, verschiedenen Anteil, der mit dem cis-1,4-Polyisoprenkautschuk in Wechselwirkung tritt, aufweist,
(4) optional ein in situ in der Kautschukzusammensetzung gebildetes harzartiges Reaktionsprodukt eines Methylendonators und Methylenakzeptors, wobei der Methylendonator Hexamethoxymethylmelamin umfasst und wobei der Methylenakzeptor mindestens eines von unmodifiziertem Phenol-Novolakharz und modifiziertem Phenol-Novolakharz, Resorcinol und Mischungen davon umfasst,
(5) optional ein Zirkoniumsalz oder Kobaltsalz, umfassend mindestens eines von Kobaltnaphthenat und Kobaltneodecanoat in einer Menge von 0,2 bis 5 ThK,
(6) Schwefel in einer Menge von mindestens 2,5 ThK, und
(7) mindestens einen mit der cis-1,4-Polyisoprenkautschuk-basierten Kautschukzusammensetzung eingekapselten Metallkord.

4. Reifenanordnung nach Anspruch 1, 2 oder 3, wobei die Korde individuell mindestens ein Filament umfassen und wobei das mindestens eine Filament aus einem messingbeschichteten Stahlfilament besteht.

5. Reifenanordnung nach Anspruch 1, 3 oder 4, wobei mindestens eine an der mindestens einen unvulkanisierten Schicht (6A, 6B) anliegende Hilfspufferkautschukschicht (11A, 11B, 11C) als mindestens eines von oben auf, unten an der mindestens einen unvulkanisierten Schicht (6A, 6B) und zwischen zwei unvulkanisierten Schichten (6A, 6B) angeordnet ist, und wobei die Kautschukzusammensetzung der Hilfspufferkautschukschicht(en), auf Basis von Gewichtsteilen je 100 Gewichtsteile Kautschuk (ThK), umfasst:
(1) mindestens einen Kautschuk auf Dienbasis, wobei der Kautschuk cis-1,4-Polyisoprenkautschuk beinhaltet,
(2) 20 bis 60 ThK eines Verstärkungsfüllstoffs, umfassend:
(a) ein Kautschukverstärkungs-Carbon Black, oder
(b) ein Silika, oder
(c) eine Kombination eines Kautschukverstärkungs-Carbon Blacks und 5 bis 45 ThK eines Silikas;
(3) ein Kopplungsmittel für das Silika, wenn die Kautschukzusammensetzung das Silika enthält, wobei das Kopplungsmittel, falls verwendet, einen Anteil, der mit Hydroxylgruppen an dem Silika reaktiv ist, und einen anderen, verschiedenen Anteil, der mit dem dienbasierten Kautschuk in Wechselwirkung tritt, aufweist,
(4) Schwefel in einer Menge von mindestens 1 ThK weniger als der Schwefelgehalt der eine Metallkordverstärkung enthaltenden Kautschukzusammensetzung.

6. Reifenanordnung nach mindestens einem der vorgenannten Ansprüche, wobei der Metallkord eine Vielzahl messingbeschichteter Metallkorde ist, die in einer im Wesentlichen parallelen Konfiguration zueinander angeordnet sind.

7. Reifenanordnung nach mindestens einem der vorgenannten Ansprüche, wobei mindestens eine unvulkanisierte Schicht (6A, 6B) 3 bis 5 ThK freien Schwefel enthält.

8. Reifenanordnung nach mindestens einem der vorgenannten Ansprüche, wobei die anliegende Hilfspufferschicht (11 A, 11 B, 11 C) mindestens 1,5 ThK weniger freien Schwefelgehalt enthält als der Schwefelgehalt der mindestens einen unvulkanisierten Schicht (6A, 6B).

9. Reifenanordnung nach mindestens einem der vorgenannten Ansprüche, wobei der Verbundwerkstoff zwei der eine Metallkordverstärkung enthaltenden unvulkanisierten Kautschukschichten (6A, 6B) enthält.

10. Reifenanordnung nach mindestens einem der vorgenannten Ansprüche, wobei die Hilfspufferschicht (11 A, 11 B, 11 C) oben auf und anliegend an der mindestens einen unvulkanisierten Schicht (6A, 6B) angeordnet ist.

11. Reifenanordnung nach mindestens einem der vorgenannten Ansprüche, wobei die Hilfspufferschicht (11 A, 11 B, 11 C) zwischen der mindestens einen unvulkanisierten Schicht (6A, 6B) und der Reifenlauffläche (2) angeordnet ist.

12. Reifenanordnung nach mindestens einem der vorgenannten Ansprüche, wobei die Hilfspufferschicht (11A, 11B, 11C) unten an der mindestens einen unvulkanisierten Schicht (6A, 6B) und anliegend an diese angeordnet ist.

13. Reifenanordnung nach mindestens einem der vorgenannten Ansprüche, wobei die Hilfspufferschicht (11 A, 11 B, 11 C) zwischen der mindestens einen unvulkanisierten Schicht (6A, 6B) und der Reifenkarkasse (7) angeordnet ist.

14. Reifenanordnung nach mindestens einem der vorgenannten Ansprüche, wobei der umfangsgerichtete unvulkanisierte innere Verbundwerkstoff vor seiner Anbringung an der Reifenanordnung vorgeformt und als Bestandteil in die Reifenanordnung aufgenommen ist.

15. Reifen, umfassend die schwefelvulkanisierte Reifenanordnung nach mindestens einem der vorgenannten Ansprüche.

## Revendications

1. Assemblage de bandage pneumatique comprenant un assemblage de composants non vulcanisés, l'assemblage de composants non vulcanisés englobant un composite interne circonférentiel non vulcanisé comprenant une combinaison d'au moins une couche non vulcanisée (6A, 6B) d'une composition de caoutchouc contenant un renforcement sous la forme d'un câblé métallique possédant une teneur en soufre d'au moins 2,5 phr et d'au moins une couche auxiliaire adjacente faisant office de tampon (11A, 11B, 11C) d'un renforcement sous la forme d'un câblé exempt de caoutchouc non vulcanisé et possédant une teneur en soufre inférieure à concurrence d'au moins 1 phr à la teneur en soufre de la composition de caoutchouc contenant un renforcement sous la forme d'un câblé métallique, dans laquelle le composite interne non vulcanisé est disposé entre une bande de roulement circonférentielle externe non vulcanisée (2) et une carcasse interne de support non vulcanisée (7), **caractérisé en ce que** ladite au moins une couche non vulcanisée(6A, 6B) d'une composition de caoutchouc contenant un renforcement sous la forme d'un câblé métallique possédant une teneur en soufre d'au moins 2,5 phr est une ceinture renforcée avec un câblé métallique s'étendant en direction circonférentielle sur la circonférence de bandage pneumatique.

2. Assemblage de bandage pneumatique selon la revendication 1, dans lequel le câblé métallique de la composition de caoutchouc contenant un renforcement sous la forme d'un câblé métallique est un câblé métallique recouvert de laiton.

3. Assemblage de bandage pneumatique selon la revendication 1 ou 2, dans lequel la composition de caoutchouc contenant un renforcement sous la forme d'un câblé métallique comprend, en se basant sur des parties en poids par 100 parties en poids de caoutchouc (phr) :
(1) un caoutchouc à base d'un élastomère diénique comprenant du caoutchouc de 1,4-cis-polyisoprène ;
(2) de 20 à 60, en variante de 30 à 50 phr d'une matière de charge faisant office de renforcement, comprenant :
(a) du noir de carbone pour le renforcement du caoutchouc ; ou
(b) de la silice ; ou
(c) une combinaison d'un noir de carbone pour le renforcement du caoutchouc et de 5 à 45 phr d'une silice ;
(3) un agent de couplage pour la silice, la composition de caoutchouc contient de la silice, l'agent de couplage, si on l'utilise, possédant une fraction apte à réagir avec les groupes hydroxyle sur la silice et une autre fraction différente apte à entrer en interaction avec le caoutchouc de 1,4-cis-polyisoprène ;
(4) de manière facultative, un produit réactionnel résineux d'un composé faisant office de donneur de groupes méthylène et d'un composé faisant office d'accepteur de groupes méthylène formé in situ au sein de la composition de caoutchouc, le donneur de groupes méthylène comprenant de l'hexaméthoxyméthylmélamine et accepteur de groupes méthylène comprenant au moins un membre choisi parmi une résine phénolique de novolaque et une résine phénolique de novolaque modifiée, du résorcinol et leurs mélanges ;
(5) de manière facultative, un sel de zirconium ou un sel de cobalt on comprenant au moins un membre choisi parmi le naphténate de cobalt et le néodécanoate de cobalt en une quantité de 0,2 à 5 phr ;
(6) du soufre en une quantité d'au moins 2,5 phr ; et
(7) au moins un câblé métallique encapsulé dans la composition de caoutchouc à base de caoutchouc de 1,4-cis-polyisoprène.

4. Assemblage de bandage pneumatique selon la revendication 1, 2 ou 3, dans lequel le câblé comprend à titre individuel au moins un filament et dans lequel ledit au moins un filament comprend un filament en acier enrobé de laiton.

5. Assemblage de bandage pneumatique selon la revendication 1, 3 ou 4, dans lequel au moins une couche auxiliaire de caoutchouc faisant office de tampon (11A, 11B, 11C) adjacente à ladite au moins une couche non vulcanisée (6A, 6B) vient se disposer dans au moins une des positions choisie parmi une position supérieure à ladite au moins une couche non vulcanisée (6A, 6B), une position inférieure à ladite au moins une couche non vulcanisée (6A, 6B) et une position intercalée entre deux couches non vulcanisées (6A, 6B), et dans lequel la composition de caoutchouc de la/des couches auxiliaires faisant office de tampon comprend, en se basant sur des parties en poids par 100 parties en poids de caoutchouc (phr) :
(1) au moins un caoutchouc à base diénique, le caoutchouc englobant du caoutchouc de 1,4-cis-polyisoprène ;
(2) de 20 à 60 phr d'une matière de charge faisant office de renforcement, comprenant :
(a) du noir de carbone pour le renforcement du caoutchouc ; ou
(b) de la silice ; ou
(c) une combinaison d'un noir de carbone pour le renforcement du caoutchouc et de 5 à 45 phr d'une silice ;
(3) un agent de couplage pour la silice, lorsque la composition de caoutchouc contient de la silice, l'agent de couplage, si on l'utilise, possédant une fraction apte à réagir avec les groupes hydroxyle sur la silice et une autre fraction différente apte à entrer en interaction avec le caoutchouc à base diénique ;
(4) du soufre en une quantité inférieure à concurrence d'au moins 1 phr à la teneur en soufre de la composition de caoutchouc contenant un renforcement sous la forme d'un câblé métallique.

6. Assemblage de bandage pneumatique selon au moins une des revendications précédentes, dans lequel le câblé métallique représente plusieurs câblés métalliques enrobés de laiton disposés dans une configuration essentiellement parallèle les uns aux autres.

7. Assemblage de bandage pneumatique selon au moins une des revendications précédentes, dans lequel au moins une couche non vulcanisée (6A, 6B) contient du soufre libre à concurrence de 3 à 5 phr.

8. Assemblage de bandage pneumatique selon au moins une des revendications précédentes, dans lequel la couche auxiliaire adjacente faisant office de tampon (11A, 11B, 11C) possède une teneur en soufre libre inférieure à concurrence d'au moins 1,5 phr à la teneur en soufre de ladite au moins une couche non vulcanisée (6A, 6B).

9. Assemblage de bandage pneumatique selon au moins une des revendications précédentes, dans lequel le composite contient deux des couches de caoutchouc non vulcanisées (6A, 6B) contenant un renforcement sous la forme d'un câblé métallique.

10. Assemblage de bandage pneumatique selon au moins une des revendications précédentes, dans lequel la couche auxiliaire adjacente faisant office de tampon (11A, 11B, 11C) vient se disposer par-dessus ladite au moins une couche non vulcanisée (6A, 6B) et en position adjacente à cette dernière.

11. Assemblage de bandage pneumatique selon au moins une des revendications précédentes, dans lequel la couche auxiliaire adjacente faisant office de tampon (11A, 11B, 11C) vient se disposer entre ladite au moins une couche non vulcanisée (6A, 6B) et la bande de roulement (2) du bandage pneumatique.

12. Assemblage de bandage pneumatique selon au moins une des revendications précédentes, dans lequel la couche auxiliaire adjacente faisant office de tampon (11A, 11B, 11C) vient se disposer par-dessous ladite au moins une couche non vulcanisée (6A, 6B) et en position adjacente à cette dernière.

13. Assemblage de bandage pneumatique selon au moins une des revendications précédentes, dans lequel la couche auxiliaire adjacente faisant office de tampon (11A, 11B, 11C) vient se disposer entre ladite au moins une couche non vulcanisée (6A, 6B) et la carcasse (7) du bandage pneumatique.

14. Assemblage de bandage pneumatique selon au moins une des revendications précédentes, dans lequel le composite interne circonférentiel non vulcanisé est préformé avant son application à un assemblage de bandage pneumatique et fait partie de ce dernier.

15. Bandage pneumatique comprenant assemblage de bandage pneumatique vulcanisé au soufre selon au moins une des revendications précédentes.
